# EUROPÄISCHE PATENTSCHRIFT

(11) **EP 1 529 685 B1**
(45) Veröffentlichungstag und Bekanntmachung des Hinweises auf die Patenterteilung: **17.10.2007**
(21) Anmeldenummer: 04019477.1
(22) Anmeldetag: 17.08.2004
(51) Int. Cl.: B60Q 1/04

(54) **Leuchteinheit für Fahrzeuge**
Vehicle lighting unit
Ensemble d'éclairage pour véhicule

(30) Priorität: 10.11.2003 DE 10352835
(43) Veröffentlichungstag der Anmeldung: 11.05.2005
(73) Patentinhaber: Hella KGaA Hueck & Co., 59552 Lippstadt (DE); HBPO GmbH, 59557 Lippstadt (DE); BMW AG, 80788 München (DE)
(72) Erfinder: Lachmayer, Roland, Dr., 59581 Warstein (DE); Sprenger, Winfried, Dipl.-Ing., 59555 Lippstadt (DE); Gödecker, Reiner, Dipl.-Ing., 59558 Lippstadt (DE); Mennen, Bernd, Dipl.-Ing., 59558 Lippstadt (DE); Opperbeck, Guido, Dipl.-Ing., 59557 Lippstadt (DE); Kovacevic, Josip, 81377 München (DE)
(74) Vertreter: Ostermann, Thomas

(56) Entgegenhaltungen:
- EP-A- 1 122 126
- EP-A- 1 203 693
- FR-A- 2 781 734
- US-B1- 6 190 030

## Beschreibung

Die Erfindung betrifft eine Leuchteinheit für Fahrzeuge nach dem Oberbegriff des Patentanspruchs 1.

Aus der US 6 190 030 B1 ist eine gattungsgemäße Leuchteinheit für Fahrzeuge bekannt, die ein Leuchtengehäuse mit einer Mehrzahl von lichttechnischen Komponenten, nämlich einen Reflektor und eine Lichtquelle, aufweist. Eine vorderseitige Öffnung des Leuchtengehäuses ist durch eine Abdeckscheibe abgeschlossen. Zur Aufnahme einer Stoßenergie bei einer Kollision des Fahrzeugs mit einem weiteren Fahrzeug oder einem Fußgänger ist zwischen der Abdeckscheibe und dem Leuchtengehäuse ein flexibles Element angeordnet. Das flexible Element kann eine vorgegebene Stoßkraft aufnehmen, ohne dass eine Beschädigung des Leuchtengehäuses bzw. der in dem Leuchtengehäuse angeordneten lichttechnischen Komponenten eintritt. Nach einer weiteren, in der Druckschrift beschriebenen Ausführungsform kann das Leuchtengehäuse selbst als federnd deformierbares Teil ausgebildet sein.

Auch aus der DE 100 23 570 C2 ist eine Leuchteinheit für Fahrzeuge mit einem die lichttechnischen Komponenten aufweisenden Leuchtengehäuse sowie einer Abdeckscheibe bekannt, wobei zur Aufnahme der Stoßenergie das Leuchtengehäuse als ein Energieabsorptionsteil ausgebildet ist, dass die Stoßenergie in Verformungsarbeit desselben umwandelt.

Bei den bekannten Leuchteinheiten besteht ein Nachteil darin, dass durch die Verformung des Leuchtengehäuses infolge der Stoßbeanspruchung die lichttechnischen Komponenten, wie beispielsweise der Reflektor oder die Lichtquelle, beschädigt werden können. Auch aus der DE 101 56 240 A1 ist eine gattungsgemäße Leuchteinheit bekannt, bei der die Zerstörung einer lichttechnischen Komponente, nämlich eines Reflektors, durch gezielte Aufnahme der Stoßenergie in Kauf genommen wird.

Aus der EP 1 203 693 A2 ist eine Leuchteinheit für Fahrzeuge mit einem Leuchtengehäuse bekannt, das an einer Rückseite desselben über eine federnde Blasebalghalterung an einer vertikalen Wand befestigt ist. Die Blasebalghalterung ist in der Lage, bei einer Stoßbeanspruchung des Leuchtengehäuses die anliegende Stoßkraft zu absorbieren. Das Leuchtengehäuse selbst weist keine Gehäuseabschnitte auf, die bei einer Stoßbeanspruchung desselben die Stoßenergie absorbieren können.

Aufgabe der vorliegenden Erfindung ist es, eine Leuchteinheit für Fahrzeuge derart weiterzubilden, dass bei Stoßbeanspruchung ein ausreichend großer Abbau der Stoßenergie gewährleistet ist einerseits und dass die Gefahr der Beschädigung der in dem Leuchtengehäuse angeordneten lichttechnischen Komponenten verringert wird andererseits.

Zur Lösung dieser Aufgabe weist die Erfindung die Merkmale des Patentanspruchs 1 auf.

Nach der Erfindung ist eine Aufteilung des Leuchtengehäuses in einen relativ steifen ersten Gehäuseabschnitt und einen deformierbaren zweiten Gehäuseabschnitt zum einen eine sichere Lagerung der lichttechnischen Komponenten und zum anderen ein relativ großer Flächenbereich zur Energieabsorption vorgesehen, so dass zum einen eine sicher Lagerung der lichttechnischen Komponenten und zum anderen ein relativ großer Flächenbereich zur Energieabsorption zur zur Verfügung stehen. Der relativ biegesteife und stabile erste Gehäuseabschnitt dient vorzugsweise als Basisträger-Gehäuseabschnitt zur Befestigung der in dem Leuchtengehäuse angeordneten lichttechnischen Komponenten. Da das Verharrungsvermögen des Basisträger-Gehäuseabschnitts in seiner Ausgangslage relativ groß ist, kann ein unerwünschtes Brechen der Befestigung der lichttechnischen Komponenten verhindert werden. Die Stoßenergie wird im Wesentlichen durch den als Energieabsorber-Gehäuseabschnitt ausgebildeten zweiten Gehäuseabschnitt aufgenommen und beeinflusst die Halterung der lichttechnischen Komponenten relativ wenig. Nach der Erfindung ist der Basisträger-Gehäuseabschnitt Bestandteil einer Unterseite des Leuchtengehäuses. Vorzugsweise ist dabei der Basisträger-Gehäuseabschnitt vollständig von einem Energieabsorber-Gehäuseabschnitt umfasst, so dass bei einem auf die Vorderseite der Leuchteinheit einwirkender Stoß der steife Basisträger-Gehäuseabschnitt relativ unverformt unter Verformung des angrenzenden Energieabsorber-Gehäuseabschnitts nach hinten gedrückt wird. Der Basisträger-Gehäuseabschnitt bildet somit einen stabilisierenden Bereich des Leuchtengehäuses, während der weitere Energieabsorber-Gehäuseabschnitt eine gezielte Aufnahme der Stoßenergie ermöglicht.

Nach einer Weiterbildung der Erfindung ist der Basisträger-Gehäuseabschnitt über Befestigungsmittel direkt mit einer das Leuchtengehäuse aufnehmenden Tragstruktur verbunden. Hierdurch kann die stabile Lagerung der lichttechnischen Komponenten weiter erhöht werden.

Nach einer Weiterbildung der Erfindung sind die lichttechnischen Komponenten über Befestigungsmittel ausschließlich mit einer Unterseite des Leuchtengehäuses lösbar verbunden. Damit sind die lichttechnischen Komponenten nicht mit dem Energieabsorber-Gehäuseabschnitt verbunden. Vorteilhaft können hierdurch während der Stoßbeanspruchung Kraftspitzen unter einem vorgegebenen Niveau gehalten werden. Weitere Vorteile der Erfindung ergeben sich aus den weiteren Unteransprüchen.

Eine Ausführungsform der Erfindung wird nachfolgend anhand einer Zeichnung näher erläutert.

Es zeigt:
- Figur:: einen schematischen Vertikalschnitt durch eine Leuchteinheit.

Eine Leuchteinheit 1 für Fahrzeuge, die vorzugsweise als ein Scheinwerfer ausgebildet ist, weist ein Leuchtengehäuse 2 auf, in dem lichttechnische Komponenten untergebracht sind. Im vorliegenden Ausführungsbeispiel werden die lichttechnischen Komponenten durch eine nicht dargestellte Lichtquelle, einen Reflektor 3 sowie einer dem Reflektor 3 vorgelagerten Blende 4 und einer Linse 5 gebildet, so dass der Scheinwerfer nach dem Projektionsprinzip ausgebildet ist. Eine vordere Öffnung des Leuchtengehäuses 2 ist durch eine Abdeckscheibe 6, die vorzugsweise glasklar ausgebildet ist, abgeschlossen.

Die lichttechnischen Komponenten 3, 4, 5 bilden eine gemeinsame Baueinheit, die mittels unterer Befestigungsmittel 7 an zwei Befestigungsstellen 8 mit einer Unterseite 9 des Leuchtengehäuses 2 lösbar verbunden ist. Die Baueinheit ist über ein oberes Befestigungsmittel 10 lösbar mit einer Oberseite 11 des Leuchtengehäuses 2 verbunden.

Damit die lichttechnischen Komponenten 3, 4, 5 bei einer Stoßbeanspruchung der Leuchteinheit 1 infolge einer Kollision des Kraftfahrzeugs mit einem anderen Fahrzeug oder mit einem Fußgänger unverändert eine vorgegebene Relativposition zu der Unterseite 9 der Leuchteinheit 1 bzw. zu einer Tragstruktur 12 des Fahrzeugs einnimmt, ist die Unterseite 9 des Leuchtengehäuses 2 als ein relativ steifer Basisträger-Gehäuseabschnitt ausgebildet. Im vorliegenden Ausführungsbeispiel wird der Basisträger-Gehäuseabschnitt durch die gesamte horizontal verlaufende Unterseite 9 des Leuchtengehäuses 2 gebildet. Dabei ist der Basisträger-Gehäuseabschnitt 9 über lösbare Befestigungsmittel 13 mit der Tragstruktur 12, beispielsweise einem Modulträger, verbunden.

An den Basisträger-Gehäuseabschnitt 9 schließt sich unmittelbar ein Energieabsorber-Gehäuseabschnitt an, der durch aufrechte Seitenwandungen, die Seitenwandungen in einem oberen Bereich verbindende Oberseite 11 und durch eine rückwärtige Stirnseite 14 gebildet wird. Der Energieabsorber-Gehäuseabschnitt 11, 14 weist eine geringere Steifigkeit auf als der Basisträger-Gehäuseabschnitt 9, so dass er bei einer Stoßbeanspruchung der Leuchteinheit 1 die Stoßenergie in Verformung desselben umwandeln kann. Die Festigkeit bzw. die Biegefestigkeit des Basisträger-Gehäuseabschnitts 9 ist relativ zu derselben des Energieabsorber-Gehäuseabschnitts 11, 14 derart größer gewählt, dass bei einem Stoß im wesentlichen der Energieabsorber-Gehäuseabschnitt 11, 14 verformt wird. Der relativ biegesteife Basisträger-Gehäuseabschnitt 9 ermöglicht, dass die lichttechnischen Komponenten 3, 4, 5 während des Stoßes auf einer relativ stabilen Grundplatte verbleiben.

Vorzugsweise kann der Energieabsorber-Gehäuseabschnitt 11, 14 elastisch ausgebildet sein, so dass bei einem leichten Stoß die Stoßenergie kurzzeitig aufgenommen und nach dem Stoß die ursprüngliche Lage wieder eingenommen werden kann.

Wirkt auf das Leuchtengehäuse 2 eine wesentlich höhere Stoßkraft, so kann es vorgesehen sein, dass zuerst das obere Befestigungsmittel 10 der lichttechnischen Baueinheit 3, 4, 5 bricht, so dass der als stabile Grundplatte ausgebildete Basisträger-Gehäuseabschnitt 9 unter Beibehaltung der Relativpositionen der lichttechnischen Baueinheit 3, 4, 5 zu der Grundplatte 9 in den rückwärtigen Bereich gedrückt werden kann. Dabei kann die Grundplatte 9 in der Unterseite 9 durch den energieabsorbierenden Gehäuseabschnitt eingefasst sein, so dass die Unterseite 9 teilweise nachgiebig ausgebildet ist und in der Lage ist, Stoßenergie aufzunehmen.

Die Grundplatte 9 kann dabei beispielsweise 50 % bis 100 % der Fläche der Unterseite 9 einnehmen. In Abhängigkeit von den Erfordernissen kann so eine gezielte Aufnahme der Stoßenergie erfolgen.

Bei einer weiter erhöhten Stoßbelastung sind die unteren Befestigungsmittel 7 derart ausgebildet, dass sie brechen und die lichttechnische Baueinheit 3, 4, 5 in der Lage ist, in den rückwärtigen Bereich des Leuchtengehäuses 2 bewegt zu werden. Hierdurch ist gewährleistet, dass die Verletzungsgefahr bei einer Fahrzeug-Fußgänger-Kollision weiter verringert wird.

Alternativ kann vorgesehen sein, dass die in der Baueinheit zusammengefassten lichttechnischen Komponenten 3, 4, 5 über Befestigungsmittel 7 ausschließlich mit der stabilen Grundplatte 9 lösbar verbunden sind. Dadurch, dass die Baueinheit 3, 4, 5 somit nicht mit dem Energieabsorber-Gehäuseabschnitt 11 verbunden ist, wird das Auftreten von durch die relativ steifen Befestigungspunkte erzeugten Kraftspitzen während des Stoßes vermieden. Nach einer weiteren Variante der Erfindung kann die lichttechnische Baueinheit 3, 4, 5 lediglich an der Unterseite 9 und/oder an der rückseitigen Stirnseite 14 befestigt sein. Hierdurch kann ebenfalls der Kraftverlauf während des Stoßes günstig beeinflusst werden.

Nach einer nicht dargestellten Ausführungsform kann die Grundplatte 9 lediglich in einem hinteren Bereich oder einem vorderen Bereich der Unterseite 9 angeordnet sein. Wesentlich nach der Erfindung ist, dass das Leuchtengehäuse 2 durch mindestens zwei Gehäuseabschnitte gebildet ist, die unterschiedliche Materialeigenschaften aufweisen, insbesondere unterschiedliche Festigkeitseigenschaften und/oder Biegefestigkeitseigenschaften aufweisen. Durch gezielte Verteilung bzw. Aufteilung dieser Gehäuseabschnitte kann eine gezielte Aufnahme der Stoßenergie gewährleistet sein.

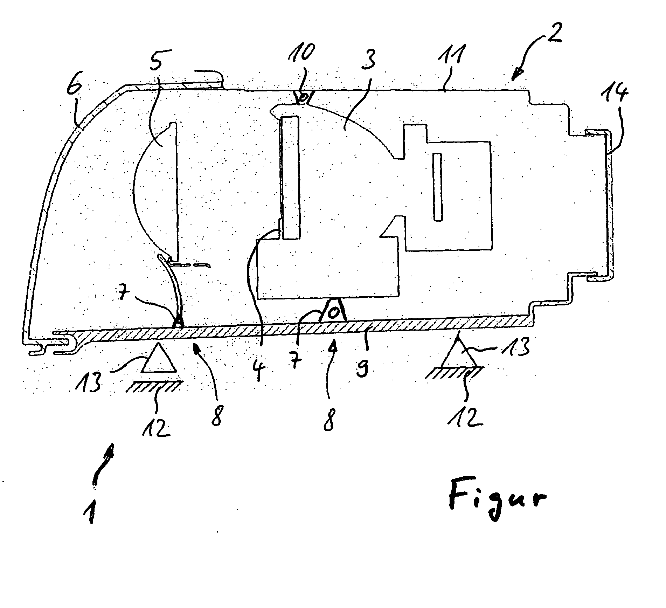

## Patentansprüche

1. Leuchteinheit für Fahrzeuge mit einem Leuchtengehäuse(2), in dem lichttechnische Komponenten (3, 4, 5) angeordnet sind, mit einer die Öffnung des Leuchtengehäuses (2) abschließenden Abdeckscheibe (6), wobei das Leuchtengehäuse (2) mit Energieabsorptionsmitteln (11, 14) versehen ist, wobei das Leuchtengehäuse (2) einen relativ steifen ersten Gehäuseabschnitt (9) aufweist, an dem im wesentlichen die lichttechnischen Komponenten (3, 4, 5) gehaltert sind, und wobei das Leuchtengehäuse (2) einen zweiten Gehäuseabschnitt (11, 14) aufweist, der bei einer Stoßbeanspruchung des Leuchtengehäuses (2) die Stoßkraft durch Verformung desselben aufnimmt, **dadurch gekennzeichnet, dass** der erste Gehäuseabschnitt (9) als ein Basisträger-Gehäuseabschnitt (9) ausgebildet ist, der im Wesentlichen eine Unterseite (9) des Leuchtengehäuses (2) bildet und dass der zweite Gehäuseabschnitt (11, 14) als ein Energieabsorber-Gehäuseabschnitt (11, 14) ausgebildet ist, der sich unmittelbar an den Basisträger-Gehäuseabschnitt anschließt.

2. Leuchteinheit nach Anspruch 1, **dadurch gekennzeichnet, dass** der Basisträger-Gehäuseabschnitt (9) von dem Energieabsorber-Gehäuseabschnitt (11, 14) vorderseitig und/oder seitlich und/oder rückseitig umfasst ist.

3. Leuchteinheit nach Anspruch 1 oder 2, **dadurch gekennzeichnet, dass** der Basisträger-Gehäuseabschnitt (9) über Befestigungsmittel (13) direkt mit einer das Leuchtengehäuse (2) tragenden Tragstruktur (12) verbunden ist.

4. Leuchteinheit nach einem der Ansprüche 1 bis 3, **dadurch gekennzeichnet, dass** der Basisträger-Gehäuseabschnitt (9) an mindestens zwei Befestigungsstellen (13) mit der Tragstruktur (12) lösbar verbunden ist.

5. Leuchteinheit nach einem der Ansprüche 1 bis 4, **dadurch gekennzeichnet, dass** die lichttechnischen Komponenten (3, 4, 5) ausschließlich über Befestigungsmittel (7) an einer Unterseite (9) des Leuchtengehäuses (2) lösbar befestigt sind.

6. Leuchteinheit nach einem der Ansprüche 1 bis 4, **dadurch gekennzeichnet, dass** die lichttechnischen Komponenten (3, 4, 5) über Befestigungsmittel (7) an einer Unterseite (9) und/oder an einer Rückseite (14) des Leuchtengehäuses (2) lösbar befestigt sind.

7. Leuchteinheit nach einem der Ansprüche 1 bis 6, **dadurch gekennzeichnet, dass** der Basisträger-Gehäuseabschnitt als eine flächige Grundplatte (9) ausgebildet ist.

8. Leuchteinheit nach einem der Ansprüche 1 bis 7, **dadurch gekennzeichnet, dass** sich die Grundplatte (9) im Wesentlichen in horizontaler Richtung von einem Rand der Abdeckscheibe (6) bis zu einer aufrechten hinteren Stirnseite (14) des Leuchtengehäuses (2) erstreckt.

## Claims

1. Vehicle lighting unit comprising a lamp shell (2) having light system components (3, 4, 5) arranged therein and comprising a lens (2) covering up an opening of said lamp shell (2), wherein the lamp shell (2) is provided with energy absorbing means (11, 14), wherein the lamp shell (2) comprises a relatively stiff first shell section (9) to which the light system components (3, 4, 5) substantially are secured, and wherein the lamp shell (2) is also provided with a second shell section (11, 14) which absorbs impact forces by deformation when impact loads are imparted to said shell (2), **characterized by** the fact that the first shell section (9) is in the form of a basic supporting section (9) which substantially constitutes an underside (9) of the shell (2) and that the second shell section (11, 14) is in the form of an energy absorbing section (11, 14) immediately adjacent to said basic supporting shell section.

2. Vehicle lighting unit according to Claim 1, **characterized by** the fact that the front and/or sides and/or rear of the basic supporting shell section (9) are surrounded by the energy absorbing section (11, 14).

3. Vehicle lighting unit according to Claim 1 or 2, **characterized by** the fact that the basic supporting shell section (9) is by means of fixing elements (13) direct connected to a supporting structure (12) carrying the lamp shell (2).

4. Vehicle lighting unit according to any of the preceding Claims 1 to 3, **characterized by** the fact that the basic supporting shell section (9) is detachably secured to the supporting structure (12) in at least two fixing positions.

5. Vehicle lighting unit according to any of the preceding Claims 1 to 4, **characterized by** the fact that the light system components (3, 4, 5) are detachably secured to the underside (9) of the lamp shell (2) by means of fixing elements (7) only.

6. Vehicle lighting unit according to any of the preceding Claims 1 to 4, **characterized by** the fact that the light system components (3, 4, 5) are detachably secured to the underside (9) and/or to the rear (14) of the lamp shell (2) by means of fixing elements (7).

7. Vehicle lighting unit according to any of the preceding Claims 1 to 6, **characterized by** the fact that the basic supporting shell section is in the form of a plane base plate (9).

8. Vehicle lighting unit according to any of the preceding Claims 1 to 7, **characterized by** the fact that the base plate (9) substantially extends in horizontal direction from a marginal edge of the cover lens (6) to an upright rear end face (14) of the lamp shell (2).

## Revendications

1. Unité d'éclairage pour véhicules automobiles, avec un boîtier de lampe (2), dans lequel sont agencés des composants techniques d'éclairage (3, 4, 5), avec une glace (6) qui ferme l'ouverture du boîtier de lampe (2), ledit boîtier de lampe (2) étant pourvu de moyens d'absorption d'énergie (11, 14), ledit boîtier de lampe (2) présentant une première section de boîtier (9) relativement rigide, à laquelle sont maintenus essentiellement les composants techniques d'éclairage (3, 4, 5), et ledit boîtier de lampe (2) présentant une deuxième section de boîtier (11, 14), qui, lorsque le boîtier de lampe (2) est soumis à une contrainte due au choc (9), absorbe la force de choc par sa déformation,
**caractérisée en ce que** la première section de boîtier (9) est réalisée en tant que section de support de base du boîtier (9) qui forme essentiellement un côté inférieur (9) du boîtier de lampe (2), et **en ce que** la deuxième section de boîtier (11, 14) est réalisée en tant que deuxième section d'absorbation d'énergie (11, 14) qui est directement raccordée à la section de support de base du boîtier.

2. Unité d'éclairage selon la revendication 1, **caractérisée en ce que** le section de support de base du boîtier (9) est enserrée de face et / ou latéralement, et / ou à l'arrière, par la section de boîtier absorbant l'énergie (11, 14).

3. Unité d'éclairage selon revendication 1 ou 2, **caractérisée en ce que** la section de support de base du boîtier (9) est reliée directement, par des moyens de fixation (13), à une structure de support (12) qui porte le boîtier de lampe (2).

4. Unité d'éclairage selon l'une des revendications 1 à 3, **caractérisée en ce que** la section de support de base du boîtier (9) est reliée de manière amovible à la structure de support (12), par l'intermédiaire d'au moins deux points de fixation (13)

5. Unité d'éclairage selon l'une des revendications 1 à 4, **caractérisée en ce que** les composants techniques d'éclairage (3, 4, 5) sont reliés de manière amovible, par des moyens de fixation (7), exclusivement sur un côté inférieur (9) du boîtier de lampe (2)

6. Unité d'éclairage selon l'une des revendications 1 à 4, **caractérisée en ce que** les composants techniques d'éclairage (3, 4, 5) sont reliés de manière amovible, par des moyens de fixation (7), à un côté inférieur (9) et / ou à un côté arrière (14) du boîtier de lampe (2)

7. Unité d'éclairage selon l'une des revendications 1 à 6, **caractérisée en ce que** la section de support de base du boîtier est réalisée sous la forme d'une plaque de base (9) plane.

8. Unité d'éclairage selon l'une des revendications 1 à 7, **caractérisée en ce que** la plaque de base (9) s'étend sensiblement dans la direction horizontale d'un bord de la glace de recouvrement (6) jusqu'à un côté frontal, arrière (14), vertical du boîtier de lampe (2).
